# EUROPEAN PATENT APPLICATION

(11) **EP 4 818 850 A1**
(43) Date of publication of application: **07.10.2026**
(21) Application number: 26169722.1
(22) Date of filing: 31.03.2026
(51) Int. Cl.: G06F 1/20

(54) **DATA STORAGE SYSTEM**

(30) Priority: 04.04.2025 AU 2025901146
(71) Applicant: Blackmagic Design Pty Ltd, South Melbourne, Victoria 3205 (AU)
(72) Inventor: DATE, Ashwin, Melbourne, 3205 (AU); VANZELLA, John Anthony, Melbourne, 3205 (AU); ABATE, Luca Santo, Melbourne, 3205 (AU)
(74) Representative: Mathys & Squire

(57) **Abstract**

Docking devices for receiving and making a data connection with at least one mass storage device are described. At least one dock of the docking devices may include an internal space with an entry for the mass storage device and an electrical connector accessible from the internal space. At least one fixed guide and at least one movable guide may be provided in the dock. Each may be low friction guides. The docking devices may also or instead include docks associated a damper, the damper being movable between an open position and a closed position to control the flow of cooling air through the internal space of the dock. Movement of the damper between the closed position and the open position may be actuated by insertion of a mass storage device into the dock.

## Description

### Field

The present disclosure relates to electrical devices that include one or more docks (called docking devices or docking stations herein), each of which is configured to receive a mass storage device so that data can be read and/or written to a mass storage device. The mass storage devices can comprise any type of mass storage device or media, for example magnetic disks, optical disks, solid state memory, or combinations thereof.

### Background

Docking stations provide a convenient means by which a mass storage device (or more typically a plurality of mass storage devices) can be connected to a data processing system, such as a host computing system. A docking station will provide a data communication interface to the host computing device and power to the mass storage devices so that read and/or write operations can be performed. They may also provide computing resources to enable management of the mass storage devices, e.g. to allow storage virtualisation and other memory control and device monitoring functions. This can enable, inter alia, a docking station to be operated as a redundant array of independent disks (RAID) array when loaded with an appropriate number of mass storage devices.

Such docking stations come in a variety of form-factors. For example they may be desktop units, which can typically hold a small number of drives (e.g. 1, 2, 4 or 8), or may be rack mountable units that have a form factor compatible with server racks. Some rack-mountable docking stations may hold a higher number of mass storage devices, e.g. more than 4, and possibly many 10s of devices.

Regardless of form factor, such docking devices typically comprise a housing that contains the electronic components of the docking device (e.g. power supply, circuit boards for data communications and computing resources.). The housing also contains a plurality of docks to receive mass storage devices. Sophisticated docking devices that are capable of either high data throughput or handling a large number of mass storage devices (or both) may have significant power demands and hence they may also require cooling systems to prevent overheating of the electrical components. Such cooling systems add complexity to the design of such systems and cost to the end product.

Such docking devices can include a number of drawbacks. Several standards for mass storage devices exist, however mass storage devices may vary in size and shape, depending on the standard to which it is designed and the storage capacity of the mass storage device. For example "2.5 inch" hard disk drives (HDDs) may comply with standards such as EIA/ECA-720, SFF-8201 and "3.5 inch" HDDs may comply with standards such as EIA/ECA-740, SFF-8301. However, as these standards do not define all physical parameters of the devices, they will vary in shape due to different designs for elements not dictated by the standards.

To address this docking devices will typically require the mass storage device to be mounted into a carrier such as a tray, mounting adaptor or caddy before insertion into a dock. The carrier provides a standardised interface with the dock station to ensure secure mechanical and electrical engagement between the mass storage device and the docking device. This can be somewhat convenient for the user in that such carriers can be designed to be easy to insert and securely held in their respective dock in use, because the dock only needs to accommodate a single design of carrier. But they are also inconvenient insofar as:
a) use of the carrier requires an extra step in the mounting of a mass storage device in the docking device;
b) carriers add cost for users, as they are extra components that must be bought, and replaced if damaged or lost;
c) one must have enough carriers to effectively use the capabilities of the docking devices - having too few carriers means that not all the docks can be utilised;
d) carriers may be a proprietary format so that they only fit one type of docking device.

In some scenarios, e.g. video and audio production environments, very large amounts of data needs to be stored, therefore there is a need for high capacity data storage systems. This means that either: a large number of mass storage devices are needed; or docking and undocking of mass storage devices needs to be relatively easy and reliable so that mass storage devices can be swapped when full or if they fail; or both. Power requirements and heat dissipation requirements also increase with the scale of the data storage system.

In addition to docking stations, there are a multitude of devices that include one or more docks, each of which is configured to receive a mass storage device so that a data can be read and/or written to a mass storage device, for example, the HyperDeck Studio^{™} range of broadcast decks, provided by the Applicant. Devices similar to these may also suffer from at least one of the above drawbacks.

The present disclosure provides a docking device configured to receive one or more mass storage devices that seeks to address at least one of the drawbacks noted herein or provide an alternative to existing systems.

The systems, devices, methods and approaches described in this section, and components thereof are known to the inventors. Therefore, unless otherwise indicated, it should not be assumed that any of such systems, devices, methods, approaches or their components described are citable as prior art merely by virtue of their inclusion in this section, or that such systems, devices, methods, approaches and components would ordinarily be known to a person of ordinary skill in the art.

### Summary

Aspects and embodiments of the present invention are set out in the appended claims. These and other aspects and embodiments of the invention are also described herein.

Docking devices for receiving and making a data connection with at least one mass storage device are described. At least one dock of the docking devices may include an internal space with an entry for the mass storage device and an electrical connector accessible from the internal space. At least one fixed guide and at least one movable guide may be provided in the dock. Each may be low friction guides. The docking devices may also or instead include at least one dock associated with a damper, the damper being movable between an open position and a closed position to control the flow of cooling air through the internal space of the dock. Movement of the damper between the closed position and the open position may be actuated by insertion of a mass storage device into the dock.

In various embodiments of the docking device, the docking device includes at least one dock comprising:
an internal space into which a mass storage device may be received for docking;
an entry into a first end of the internal space, through which a mass storage device is inserted along a direction of insertion for docking;
an electrical connector accessible from the internal space, said electrical connector arranged to provide at least a data connection to a docked mass storage device, the electrical connector being located opposite the entry and separated therefrom along the direction of insertion;
at least one fixed guide positioned in a fixed physical relationship to the electrical connector, said at least one fixed low friction guide being arranged to guide insertion of a mass storage device into the internal space, and
at least one movable guide mounted in a variable physical relationship to the electrical connector, and biased towards the at least one fixed guide, such that the at least one movable guide pushes a docked mass storage device against the at least one friction guide.

In some embodiments the at least one fixed guide is a low friction guide. In some embodiments the at least one movable guide is a low friction guide. In some embodiments the at least one fixed guide is a low friction guide and the at least one movable guide is a low friction guide.

In some embodiments said at least one movable guide is supported by at least one spring as arranged to bias the at least one movable guide towards the at least one fixed guide. The at least one spring may comprise a leaf spring.

In some embodiments the dock further includes one or more slides along on which a mass storage device may be guided during insertion into the dock.

In some embodiments the internal space within said dock is rectangular or generally rectangular in cross section, taken perpendicular to the direction of insertion, and said internal space is defined by a first side associated with at least one fixed guide, and a second side associated with the at least one movable low friction guide that is opposite the first side and being separated therefrom by a pair of third sides that are opposite to each other, wherein the opening is located at an outer end of the first side, second side and pair of third sides. The one or more slides may comprise one or more ribs extending along each of said third sides in the direction of insertion. The first and second sides may be angled relative to each other so that a distance between them reduces along the direction of insertion. The pair of third sides or slide slides associated therewith may be angled relative to each other so that a distance between them reduces along a direction of insertion. Either of these arrangements or both of them together may be such that the internal space tapers from the entry towards the connector to thereby guide a mass storage during insertion into the dock such that a compatible electrical connector of the mass storage device is aligned with the electrical connector of the dock for connection thereto.

In some embodiments the docking device is configured to receive a mass storage device according to at least one standard which specifies at least some predetermined geometrical properties of the mass storage device; wherein said predetermined geometrical properties include a position of a compatible electrical connector and a position of at least one mounting hole defined by a threaded body on at least one side of the mass storage device; and wherein said at least one fixed guides are positioned relative to the electrical connector of the dock so that in use they are aligned, along the direction of insertion, with a threaded body defining least one mounting hole of a mass storage device inserted into said dock. At least one said fixed guide may be positioned such that when a mass storage device having said at least some predetermined geometrical properties is fully inserted into the dock such that at least a data connection is made between the electrical connector of the dock and the compatible electrical connector of the mass storage device, said at least one fixed guide is in contact with a respective threaded body defining a mounting hole of a mass storage device.

In some embodiments either or both of said at least one fixed guide or said at least one moveable low comprises a set of one or more rollers. The set of one or more rollers may comprise a pair of rollers with a common axis of rotation.

In some embodiments the at least one fixed guide comprises at least one roller mounted at an outer portion of the first side such that a rolling surface of said at least one roller protrudes into the internal space of the dock to engage with a surface of a mass storage device inserted into the dock; and the at least one movable guide comprises at least one roller mounted at an outer portion of the second side such that a rolling surface of said at least one roller protrudes into the internal space of the dock to engage with a mass storage device inserted into the dock.

In various embodiments of the docking device, which may include or may not include the at least one dock described in one or more of the immediately preceding paragraphs, the docking device includes:
one or more docks for receiving a respective mass storage device, each dock comprising:
at least one wall that at least partly defines an internal space into which a mass storage device may be received for docking,
an entry into a first end of the internal space, through which a mass storage device is inserted along a direction of insertion for docking; and
an electrical connector accessible from the internal space, said electrical connector including one or more electrical contacts arranged to provide at least a data connection to a docked mass storage device; the electrical connector being located opposite the entry and separated therefrom along the direction of insertion; and
a damper associated with the dock, said damper being movable between an open position and a closed position to control the flow of cooling air through the internal space of said dock, wherein movement of said damper between the closed position and the open position is actuated by insertion of a mass storage device into the dock.

In some embodiments, for each dock: when said damper is in the open position, cooling air can pass into the internal space to cool a mass storage device docked therein; and when said damper is in a closed position cooling air is blocked from passing into said internal space.

In some embodiments the damper is biased to the closed position in the absence of a mass storage device in the dock.

In some embodiments the docking device further includes a plenum arranged in fluid communication with at least two docks, such that said damper associated with each dock controls the flow of cooling air between the plenum and the respective dock. The docking device may further include an air transport system that pressurises the plenum such that air flows from the plenum through an open damper associated with a dock.

In some embodiments each dock further includes an actuator, that is moved by a mass storage device when said mass storage device is inserted into the internal space of the dock such that said actuator opens said damper. The actuator may be carried on a wall that at least partly defines the internal space within the dock and transfers motion of the mass storage device during insertion into motion that opens the damper.

In some embodiments the actuator comprises one or more protrusions or projections that are integrally formed with the damper or carried on the damper, wherein said one or more protrusions or projections extend into the internal space of the dock and are pushed by the mass storage device during its insertion into the dock to thereby move the damper to the open position. Said one or more protrusions or projections may include at least one of a: rod, pin, lobe, flange, boss, knob, ridge, block; and spacer. The docking device may include a plurality of such protrusions or projections.

In some embodiments the damper comprises a movable flap. The flap may be carried on a hinge to enable movement of the flap between the open and closed position. The flap may be resiliently deformable and deforms to enable movement of the flap between the open and closed position.

In some embodiments the damper includes a spring to bias the damper into the closed position.

In some embodiments the damper comprises a movable member that is pushed open by the insertion of a mass storage device into the dock wherein said member is made of resilient material such the damper is biased to return to the closed position on removal of said mass storage device from the dock.

In some embodiments the damper opens or closes an airflow path through a wall that at least partially defines the internal space of the dock.

In some embodiments each dock further comprises:
at least one fixed guide positioned in a fixed physical relationship to the electrical connector, said at least one fixed guide being arranged to guide insertion of a mass storage device into the internal space, and
at least one movable guide mounted in a variable physical relationship to the electrical connector, and biased towards the at least one fixed guide, such that the at least one movable guide pushes a docked mass storage device against the at least one fixed guide.

As mentioned, in some embodiments the at least one fixed guide is a low friction guide. In some embodiments the at least one movable guide is a low friction guide. In some embodiments the at least one fixed guide is a low friction guide and the at least one movable guide is a low friction guide.

In some embodiments of the docking device, one or both of: said at least one fixed guide; and said at least one moveable low: comprises a set of one or more rollers.

While the invention(s) disclosed herein are amenable to various modifications and alternative forms, specific embodiments are shown by way of example in the drawings and are described in detail. It should be understood, however, that the drawings and detailed description are not intended to limit the invention(s) to the particular form disclosed. Furthermore, all alternative combinations of two or more of the individual features mentioned or evident from the text or drawings comprise additional aspects or inventive disclosures, which may form the subject of claims.

Any feature in one aspect of the disclosure may be applied to other aspects of the invention, in any appropriate combination. In particular, method aspects may be applied to apparatus aspects, and vice versa. As used herein, means plus function features may be expressed alternatively in terms of their corresponding structure, such as a suitably programmed processor and associated memory.

It should also be appreciated that particular combinations of the various features described and defined in any aspects of the disclosure can be implemented and/or supplied and/or used independently.

### Brief description of the Drawings

Figure 1 is a schematic block diagram of an embodiment of a docking device having 3 docks, and a mass storage device;
Figure 2 is a schematic block diagram of an embodiment of a docking device in cross section through a dock;
Figure 3A and 3B show a schematic cross section perpendicular to that of figure 2;
Figures 4A to 4D and 5A to 5E illustrate stages in the insertion of a mass storage device into a dock;
Figures 6 to 8 illustrate stages in the insertion of a mass storage device into a dock;
Figures 9A to 10B illustrate stages in the insertion of a mass storage device into a dock illustrating airflow within the device housing;
Figure 11A and 11B show an embodiment of a docking device;
Figure 12A to 12H show docks with dampers of different embodiments; and
Figure 13A to 13D show docks with fixed and movable low friction guides of different embodiments.

### Detailed description

In the following description numerous specific details are set forth in order to provide a thorough understanding of the present invention. It will be apparent, however, that the present invention may be practiced without these specific details. In some instances, well-known structures and devices are shown in block diagram form in order to avoid unnecessary obfuscation of salient details.

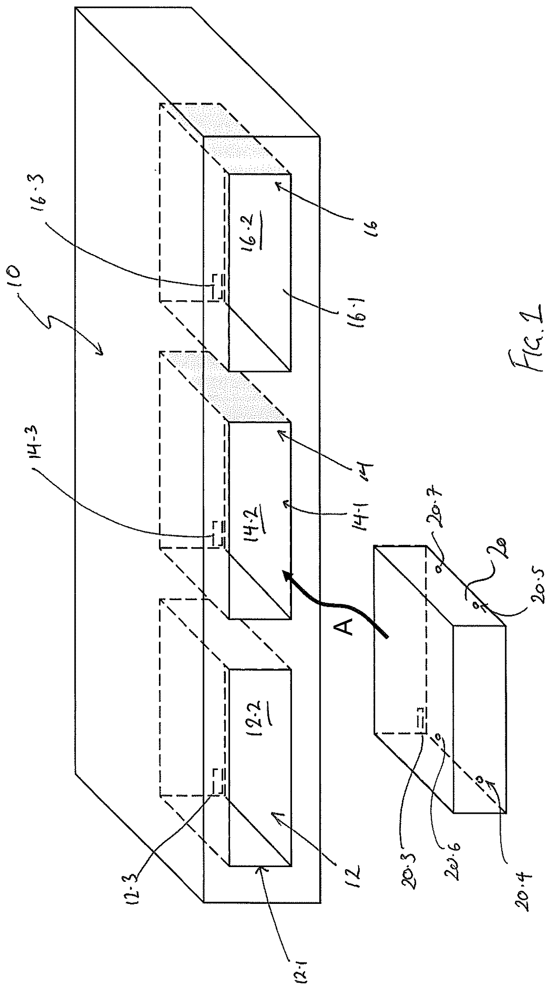

Figure 1 schematically illustrates a docking device. The exemplary docking device 10 has three docks 12, 14, 16, into which mass storage devices 20 such as a hard disk drive (one only shown in Figure 1) can be received as indicated by arrow A, but other embodiments may include fewer docks (e.g. one or two) or may include four or more docks. Some embodiments can include relatively large numbers of docks - e.g. 8, 10, 16, 32 or another number of docks.

In many embodiments each dock 12, 14, 16 will be the same. However in some embodiments, one or more docks in the docking device may differ in dimensions/formats to accommodate mass storage devices of varying types.

Each dock 12, 14, 16 has an entry 12.1, 14.1, 16.1 at one end of its internal space 12.2, 14.2, 16.2 into which a mass storage device 20 (e.g. hard disk drive) may be inserted to mount the mass storage device 20 into the dock. At the other end of its internal space 12.2, 14.2, 16.2 each dock 12, 14, 16 has an electrical connector 12.3, 14.3, 16.3. The electrical connector 12.3, 14.3, 16.3 is accessible from the internal space 12.2, 14.2, 16.2 so that a mass storage device inserted into the dock 12, 14, 16 can connect to it. The electrical connector 12.3, 14.3, 16.3 provides at least a data connection between the dock and the mass storage device 20 when it is in the dock 12, 14, 16, but will typically also provide power to the mass storage device 20. The direction of insertion of a mass storage device into the dock 12, 14, 16 will usually match the direction in which the connector is arranged to receive a compatible connector on the mass storage device, so that the act of pushing the mass storage device into the dock 12, 14, 16 also causes a compatible electrical connector of the mass storage device to mate with the electrical connector 12.3, 14.3, 16.3 of the respective dock into which it is inserted. The electrical connector 12.3, 14.3, 16.3 may include separate data and power connectors, such as is the case of SATA connectors that may have a 7 conductor data connector and a 15 pin power connector, but for convenience all combinations will be described singularly as the electrical connector. The electrical connector may include one or more electrical contacts arranged to provide at least the data connection and may include one or more electrical contacts arranged to provide the power connection. As noted, the electrical connector will usually be of a known and relatively common connector type so as facilitate acceptance of a wide variety of mass storage devices without the need for adaptors or other specialised apparatus.

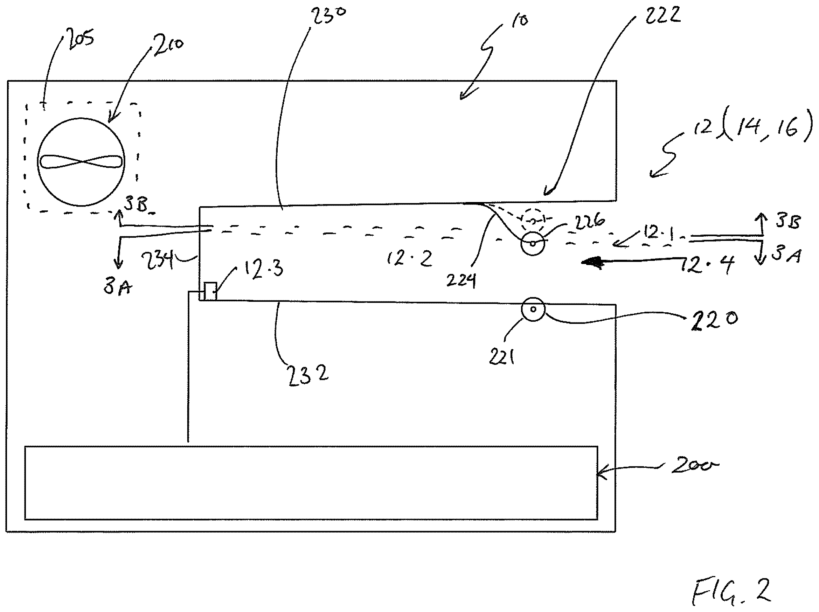

Figure 2 shows a schematic cross section through the docking device 10 according to an embodiment of the disclosure, showing additional detail of any one of the docks 12, 14 or 16. In cross section it is possible to see the internal space 12.2 into which a mass storage device (not shown in Figure 2) may be received for docking. The mass storage device is inserted into the dock 12 in the "direction of insertion" indicated by arrow 12.4. The electrical connector 12.3 is located at the opposite end of the internal space 12.2 and arranged such that when a mass storage device is pushed into the dock 12 along the direction of insertion 12.4 a corresponding connector on the mass storage device mates with the electrical connector 12.3 and makes a data connection between the mass storage device and the docking device 10 so that the mass storage device can be operated by the docking device 10. The electrical connector 12.3 may lie either inside or outside the internal space (or partly both) as long as it is positioned so that the compatible electrical connector of the mass storage device can connect to it. The electrical connector 12.3 may be a data and power connector. The electrical connector 12.3 may be located opposite the entry and separated therefrom along the direction of insertion.

The dock 12 also includes one or more fixed guides 220 arranged to guide insertion of a mass storage device into the internal space 12.2. The one or more fixed guides 220 are positioned in a fixed physical relationship to the electrical connector. The dock 12 also includes at least one movable guide 222. The at least one movable guide 222 is mounted to the dock 12 or other component of the docking device 10 such that it can have a variable physical relationship to the electrical connector. That is, it can move relative to the electrical connector 12.3. The at least one movable guide 222 is positioned on an opposite side of the internal space 12.2 to the at least one fixed guide 220, and is biased towards the at least one fixed guide 220. This means that a mass storage device that is inserted between the at least one movable guide 222 and the at least one fixed guide 220 is pushed against the at least one fixed guide 220 by the force applied by the at least one movable guide 222.

The at least one fixed and moveable guide(s) can be low friction guides for example, a wheel, roller, ball (or set of such elements), or a slide(s) made of low or lower friction material (compared to the dock housing components). The fixed and moveable (low friction) guide(s) may be of the same type (e.g. all are wheels), but also need not be - e.g. the moveable low friction guides can be rollers and the fixed low friction guides can be PTFE slide(s).

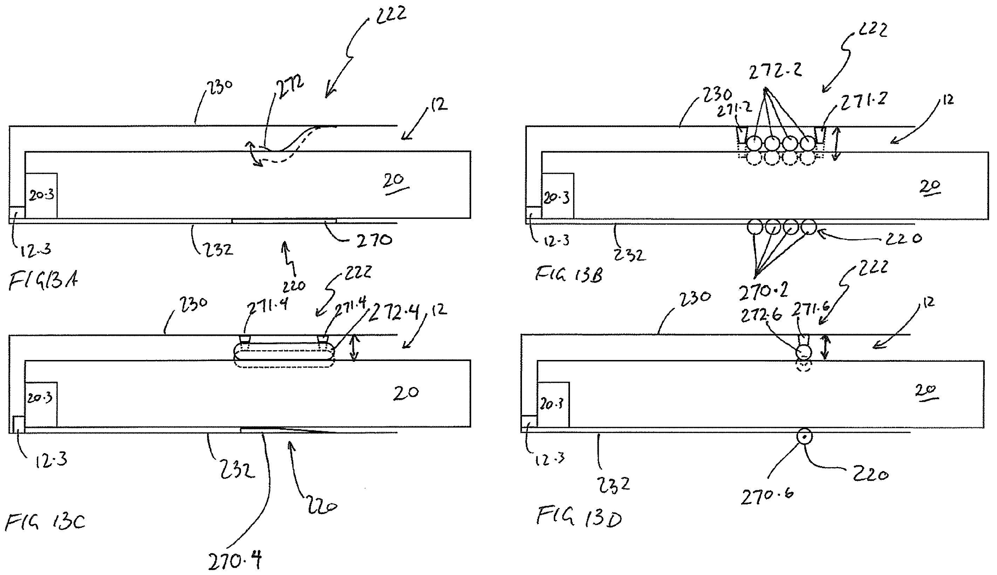

Figures 13A to 13D illustrate various examples of alternative moveable low friction guides and fixed low friction guides that may be used in different embodiments. Combinations of any such embodiments may be used together as appropriate. In each example components with like features have been like numbered, and features previously described will not be discussed again for brevity.

In figure 13A the fixed and movable guides 220 and 222 respectively comprise elements made from a low friction plastics material such as PTFE, Nylon (possibly with suitable lubricating additives), extra high molecular weight polyethylene, or PET with suitable lubricating additives. In this example, the fixed guide(s) comprise a slide 270 on the bottom face 232 of the dock 12, and the movable guide(s) comprise a resilient tongue 272 which descends into the dock 12 from the top face 230. The tongue 272 takes the shape shown in dotted lines when no mass storage device is inserted in the dock 12, and is deformed to the position shown in solid lines upon insertion of a mass storage device.

In figure 13B the fixed and movable guides 220 and 222 comprise a series of wheels or rollers. In this example, the fixed guide(s) comprise a plurality of rollers 270.2 on the bottom face 232 of the dock 12, and the movable guide(s) comprise a series of movable rollers 272.2. As can be seen they are located so that they descend into the dock 12 from the top face 230 in a manner that allows them to be forced upwards by insertion of a mass storage device 20 into the dock. The movable rollers 272.2 may be individually mounted on a sprung mount 271.2 so that they move independently or commonly mounted so that they move in concert.

In figure 13C the fixed and movable guides 220 and 222 also comprise elements made from a low friction plastics material such as PTFE, Nylon (possibly with suitable lubricating additives), extra high molecular weight polyethylene, or PET with suitable lubricating additives. In this example, the fixed guide(s) comprise a wedge-shaped slide 270.4 on the bottom face 232 of the dock 12, and the movable guide(s) comprise a movable slide plate 272.4 which descends into the dock 12 from the top face 230. The slide plate is mounted on springs 271.4 which push it downwards into the dock, but allow it to be forced upwards by insertion of a mass storage device 20 into the dock. The block 272.4 sits at the position shown in dotted lines when no mass storage device is present in the dock 12, but moves to the position shown in solid lines upon insertion of a mass storage device. The plate 272.4 has a rounded front edge to provide a lead-in to improve ease of insertion of a mass storage device into the dock 12.

In figure 13D the fixed and movable low friction guides 220 and 222 comprise individual wheels or rollers. In this example, the fixed low friction guide(s) comprise a individual rollers 270.6 associated with the bottom face 232 of the dock 12, and the movable low friction guide(s) comprise a movable roller 272.6 associated with the top face 230 of the dock 12 . The movable roller 272.6 is located so that it descends into the dock 12 from the top face 230 in a manner that allows it to be forced upwards by insertion of a mass storage device 20 into the dock. The movable roller 272.6 is mounted on a sprung mount 272.6 so that it returns to its extended position upon removal of a mass storage device from the dock 12.

In one form, the at least one movable guide 222 is supported by at least one spring such that it is biased towards the at least one fixed guide 220. In this example the moveable guide 222 includes a leaf spring 224 on which a roller 226 is mounted. The fixed guide 220 is also a roller 221. As stated herein, the guides may be low friction guides.

Referring primarily again to figure 2, the dock 12 has at least one wall that defines the internal space 12.2 of the dock 12. The wall(s) in this case, include a top wall 230, bottom wall 232 and rear wall 234, and a pair of side walls (236, 238 - not shown in Fig 2). However it should be noted that any of the walls, up to all of the walls, may not be present so long as sufficient structure is provided to guide and hold the mass storage device relatively securely with respect to the electrical connector 12.3. Also the walls may not be continuous and can include apertures, holes, grills or discontinuities e.g. for ventilation.

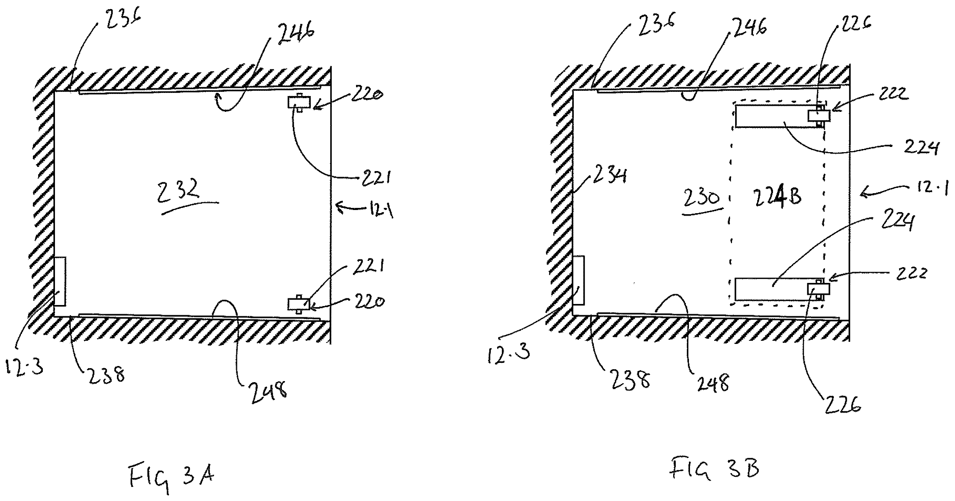

Fig 3A and Fig 3B show views through the dock 12 perpendicular to the cross section in Figure 2. Fig 3A looks down along line 3A and Figure 3B looks up along line 3B. As can be seen the dock 12 includes a pair of side walls 236 and 238. Each side wall 236 and 238 includes at least one slide 246, 248 respectively. The slides extend along the side walls 236, 238 and serve to guide a mass storage device along the dock 12 during insertion. The slides may be ribs integrally formed with the side walls 236, 238 or separate members attached to the side walls, such as strips of low friction material. In some embodiments multiple slides can be provided in each wall.

Figure 3A shows the fixed guides 220 mounted on the first side 232 of the dock 12 in plan view. In this embodiment two fixed guides 220 are provided.

In some embodiments a guiding surface of the slides 246, 248 on opposite side walls 236, 238 can be arranged to become closer to each other along the direction of insertion of a mass storage device into the dock 12. This can be achieved by the side walls coming together or the slides extending further inward from their respective wall. In effect, the internal space 12.2 of the dock tapers inwards. This can help align the mass storage device with the electrical connector 12.3 whilst maintaining ease of initial insertion of the mass storage device into the entry.

As can be seen, each fixed guide 220 is located adjacent a respective side wall 236 and 238. However, it may be noted that since the fixed guides 220 are nearer to the entry 12.1 where the internal space is relatively wide, compared to the innermost end of the walls 236 238 or their slides 246, 248 the fixed guides 220 are spaced inwards from the walls a small distance. The guiding surface (e.g. roller surface) of the fixed guides 220 are positioned to be aligned with, and make contact with a face of an inserted mass storage that is correctly aligned with the electrical connector 12.3.

Figure 3B shows the inside of the dock 12 from the other direction, so that the second side 230 of the dock 12 and its associated moveable guides 222 can be seen. As with the fixed guides, two moveable guides 222 are provided. Each guide 222 comprises a roller 226 mounted on a respective leaf spring 224, that is in turn mounted to the second wall 230 of the dock 12. In some embodiments both rollers 226 could be mounted to a common biasing mechanism, (such as a common leaf spring 224, illustrated in dotted lines in Fig 3B). It should also be noted that the biasing means need not be a leaf spring, but could be any type of suitable mechanism, such as:
a resiliently deformable (e.g. elastomeric) structure, block or pad,
a coil spring,
a torsion spring.

Moreover the biasing mechanism may be integrally formed with the wall 230, e.g. the low friction guide may be formed on or mounted to a resiliently deformable portion of the wall (e.g. a flap cut into the wall that is able to flex separately to the remainder of the wall.)

In many embodiments a docking device will be adapted to receive mass storage device(s) that are of a given type, e.g. made according to at least one standard. The relevant standard may specify inter alia, at least some geometrical properties of the mass storage device. For example, turning to the mass storage device 20 illustrated schematically figure 1, the position and type of electrical connector 20.3 may be specified. Moreover, the position of at least one mounting hole e.g. 20.4, 20.5, 20.6, 20.7 will typically be defined so that manufacturers of devices that use such mass storage devices can easily design structures that can support a mass storage device. The mounting holes will typically comprise a threaded body on at least one side of the mass storage device - e.g. a threaded boss in a cast metal or plastic housing, or tapped hole or nutsert, rivnut, or the like in a wall of a sheetmetal housing.

In some embodiments the dock 12 can take advantage of this known geometry to support a mass storage device within the dock 12 securely. In this regard, said at least one fixed guide may be positioned relative to the electrical connector of the dock so that in use they are aligned, along the direction of insertion, with a threaded body defining least one mounting hole of a mass storage device inserted into said dock. Moreover they may be positioned along the direction of insertion of the mass storage device such that the threaded body defining least one mounting hole is rests in contact with the at least one fixed guide. The same positioning principles may be applied to the moveable guides. However, while most mass storage devices are generally the shape of a rectangular prism, they may not be uniformly or regularly shaped on all sides. They may have irregularly shaped or contoured outer housings e.g. chosen for aesthetic reasons, due to engineering or manufacturing optimisation, or simply for convenience. Accordingly, since the moveable guides are movable and biased towards the fixed guides so as to somewhat clamp a mass storage device between them, the movement can be used to take up some of the resulting irregular thickness of the mass storage device while still maintaining some clamping force and allowing it to be guided into position in the dock 12.

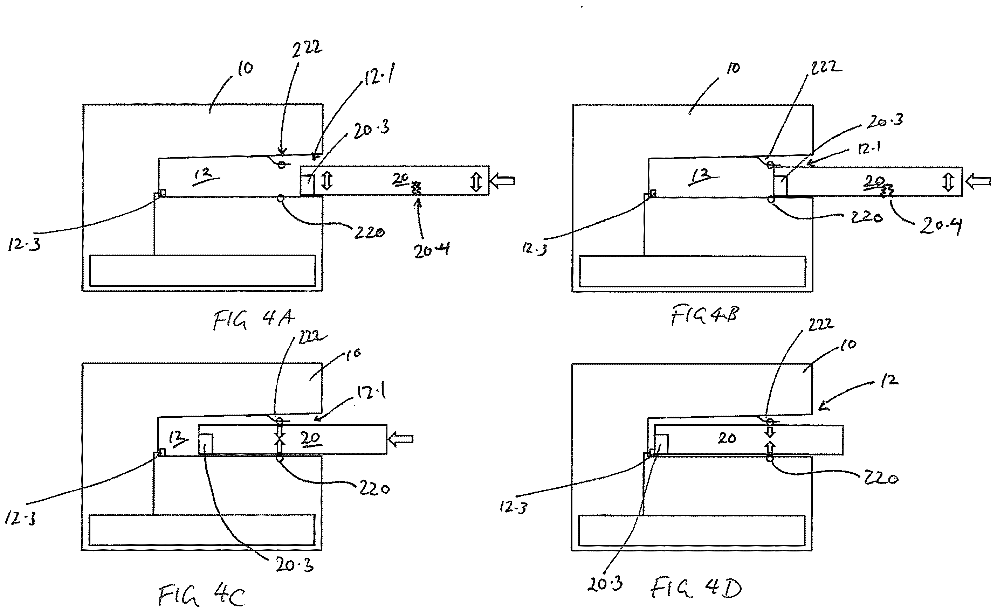

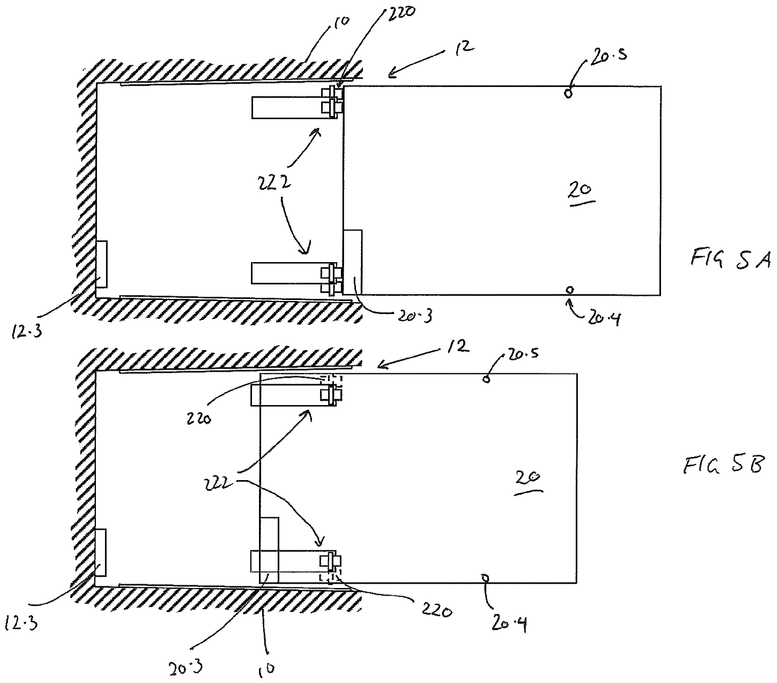

Figures 4A to 4D and 5A to 5E are a sequence of schematic illustrations of a mass storage device being inserted into a dock of a docking device of an embodiment. The mass storage device 20 is as illustrated in figure 1 and the dock illustrated is the same as dock 12 of figures 2 and 3A and 3B, and for brevity details already described will not be repeated.

In Figure 4A a user begins to insert a mass storage device 20 into the entry 12.1 of the dock 12. The mass storage device is placed in an appropriate orientation so that its connector 20.3 is at the back so that it will meet the electrical connector 12.3 of the dock 12 when the mass storage device 20 is fully docked.

Next, in figure 4B and 5A the mass storage device 20 is inserted along the direction of insertion a little further, namely to the point that the rearmost edge of the mass storage device 20 is just contacting the fixed guides 220 and the movable guides 222. With further insertion of the mass storage device 20 the into the dock 12 as shown in figure 4C and 5B, the bottom of the mass storage device 20 will begin to be guided on top of the fixed guides 220 (which in this case the rollers 221 provide low friction) and the movable guides 222 will be move upwards by the top surface of the mass storage device 20 to accommodate the thickness of the mass storage device 20. The movable guides 222 may also be low friction and will press downwards against mass storage device due to the bias applied by their respective springs 224 to thereby provide some clamping of the mass storage device 20 between the fixed and movable guides 220, 222.

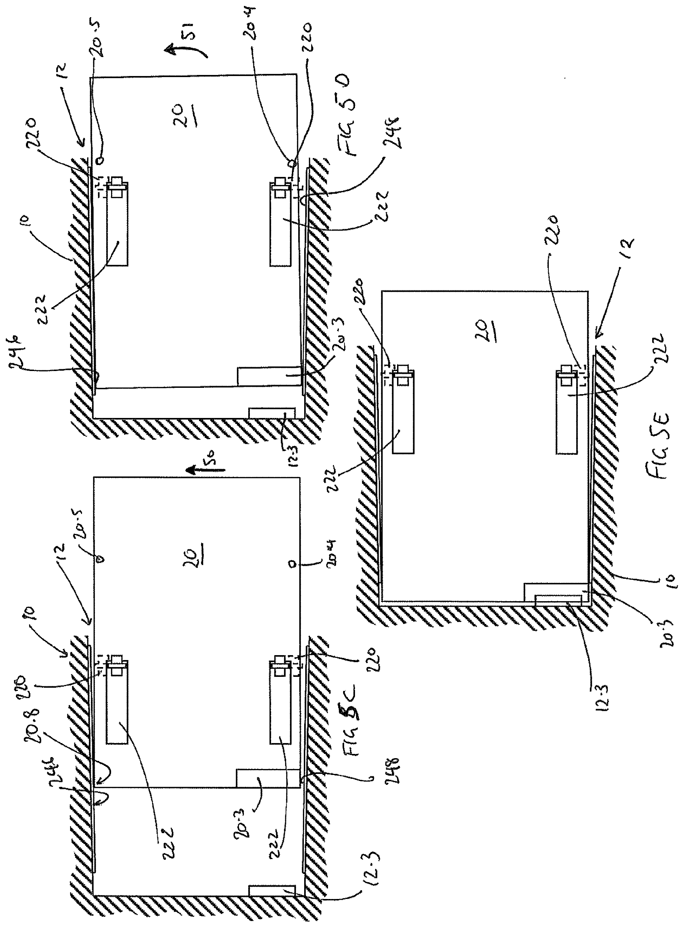

Figures 5C and 5D show the operation of the slides 246 and 248 in guiding the mass storage device in a direction that is perpendicular to guiding effect of the fixed and movable guides 220, 222. At figure 5C the mass storage device is shown pushed into the internal space 12.2 of the dock 12 offcentre in direction of arrow 50 such that the rearmost corner 20.8 contacts the slide 246 on one side wall of the dock 12. On further insertion the slide 246 will push the corner 20.8 of the mass storage device 20 inwards towards a more correct position. Although, as can be seen in figure 5D this may result in angular misalignment of the mass storage device 20 as shown by arrow 51. However the slides 246 and 248 serve to limit maximum misalignment. And, because the sliding faces of the slides 246 and 248 get closer together along the direction of insertion, the back edge of the mass storage device is essentially centred in the dock's internal space 12.2. In particular as can be seen in figure 5D the compatible connector 20.3 of the mass storage device is essentially aligned with the electrical connector 12.3 of the dock 12.

In figures 4D and 5E the mass storage device 20 has been fully inserted into the dock such that the compatible connector 20.3 of the mass storage device has fully engaged with the the electrical connector 12.3 of the dock 12. The dock's 12 and mass storage device's electrical connectors may include suitable lead ins (e.g. tapers) to finally guide and enable mating of the compatible connector 20.3 of the mass storage device with the electrical connector 12.3 of the dock 12.

In figures 4 and 5 the position of the mounting holes 20.4 and 20.5 in the mass storage device (which may have positions relative to the compatible connector 20.3 that are specified by a standard) can be seen. As will be noted in plan view they are generally aligned with the rollers of the fixed guides, and in side elevation, when the mass storage device is fully inserted into the dock 12 the fixed guide rollers are aligned with the holes such that the area surrounding the holes (i.e. the component in which the holes are formed) provides the support point for mass storage device against the fixed guides 220. Thus the mass storage device is supported by the fixed guide on a structure that is engineered to support the mass storage device at all times when it is docked.

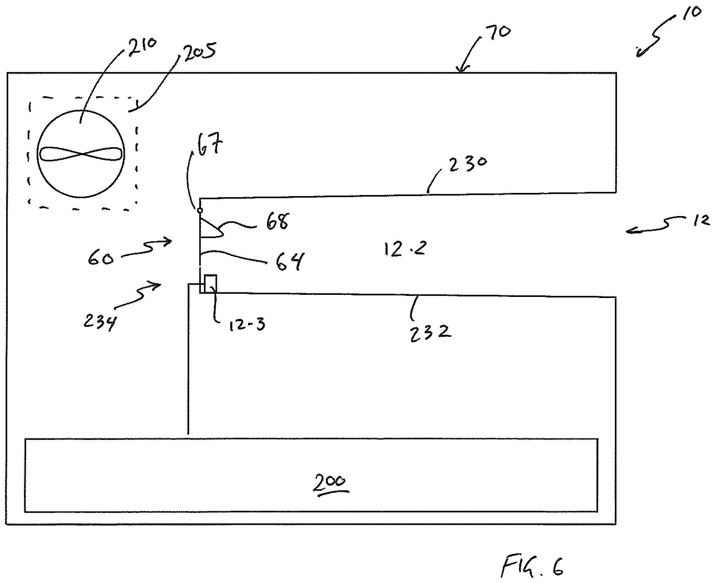

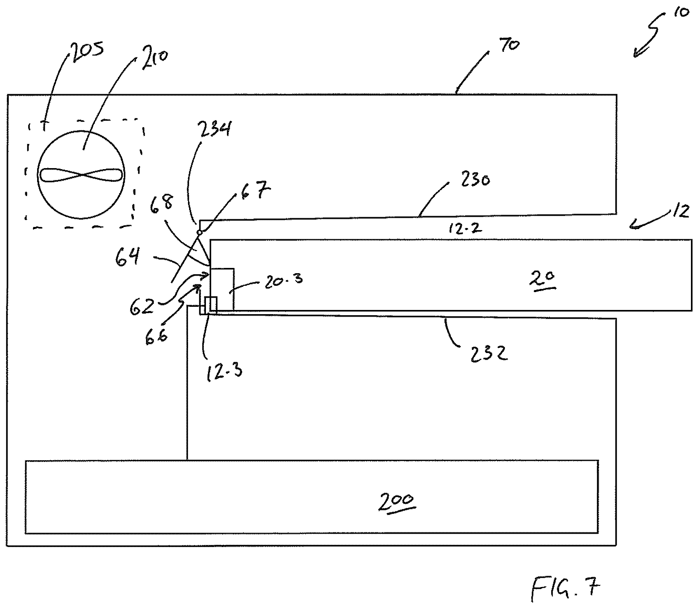

Figure 6 and 7 illustrates an embodiment of a docking device 10 according to an embodiment with a ventilation mechanism. The ventilation mechanism may find particular utility in embodiments with a plurality of docks, for reasons that will become apparent, but may also be of use with single-dock embodiments. In devices with a single dock the ventilation mechanism of the present embodiment may be particularly useful if the docking device generates significant heat, e.g. by performing significant data processing, when no mass storage device is docked within it.

The docking device 10 includes at least one dock 12. The dock 12 is generally similar to the embodiments of figures 1 to 5, however the dock additionally includes a damper 60 associated with the dock. The damper 60 is movable between a closed position and an open position to control the flow of cooling air through the internal space 12.2 of said dock 12. The cooling air may be provided by an air transport system that includes a fan 210, and, inter alia, one or more air inlets. In use, the movement of said damper between the closed position (illustrated in figure 6) and the open position (shown in figure 7) is actuated by insertion of a mass storage device 20 into the dock 12. The damper may include a flap, door or panel that is arranged to close off an airflow path 62 e.g. one or more holes, openings, apertures, vents, grates or the like, through a wall or side of the dock into the internal space 12.2 of the dock 12. The damper 60 is movable, e.g. by hinging, flexing, sliding or pivoting to open the airflow path, which thereby allows a flow of cooling air into the internal space 12.2 of the dock 12 to cool the docked mass storage device. The damper may be biased into the closed position so that when a mass storage device is removed from the dock the damper closes and cooling air is thereby prevented from flowing into the internal space of a dock that does not need to be cooled. In this manner some embodiments ensure that only active components and part of the docking device are cooled to improve the effectiveness of cooling.

Figures 6 and 7 show a first embodiment of a damper 60. The damper includes a flap 64 sized to close off the airflow path 62 through the vent 66 in the rear wall 234 of the dock 12. The flap 64 is connected to the rear wall 234 of the dock 12 by a hinge 67. The hinge 67 can include a spring (not shown) to bias hinge toward an orientation in which the flap 64 is in the closed position. The flap 64 carries an actuator 68. The actuator 68 in this example is a lobe shaped protrusion or projection (or several such protrusions or projections) that extends into the internal space 12.2 of the dock 12 when the damper 60 is closed. When a mass storage device 20 is pushed into the dock 12 towards its docked position, as shown in figure 7, the actuator 68 touches the mass storage device and is pushed backwards by it. In turn the actuator 68 pushes the damper 64 open (Figure 7) to thereby open the airflow path 62.

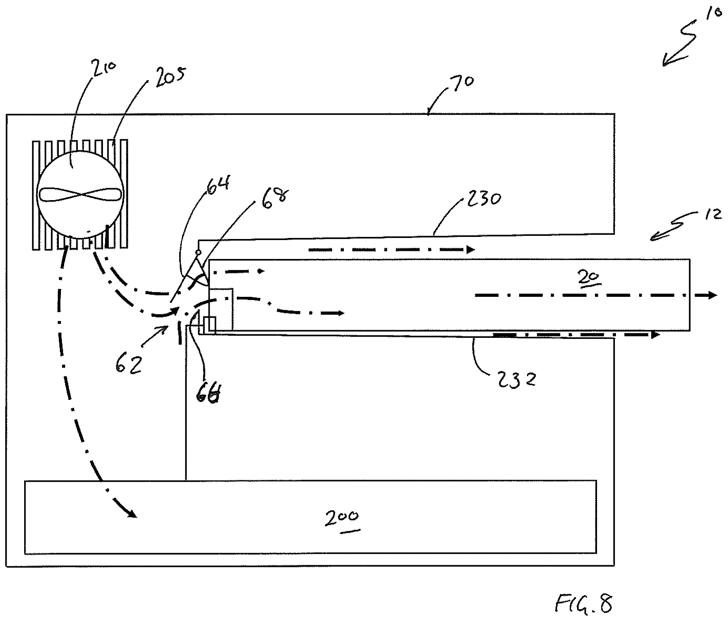

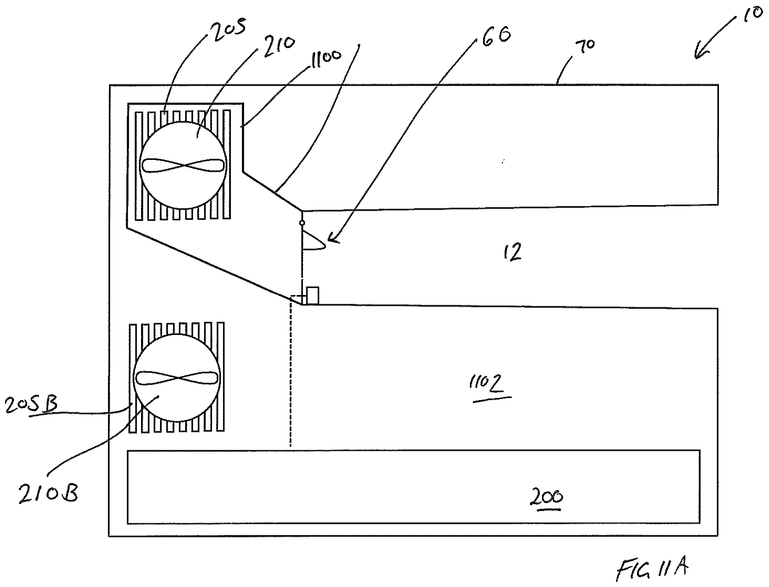

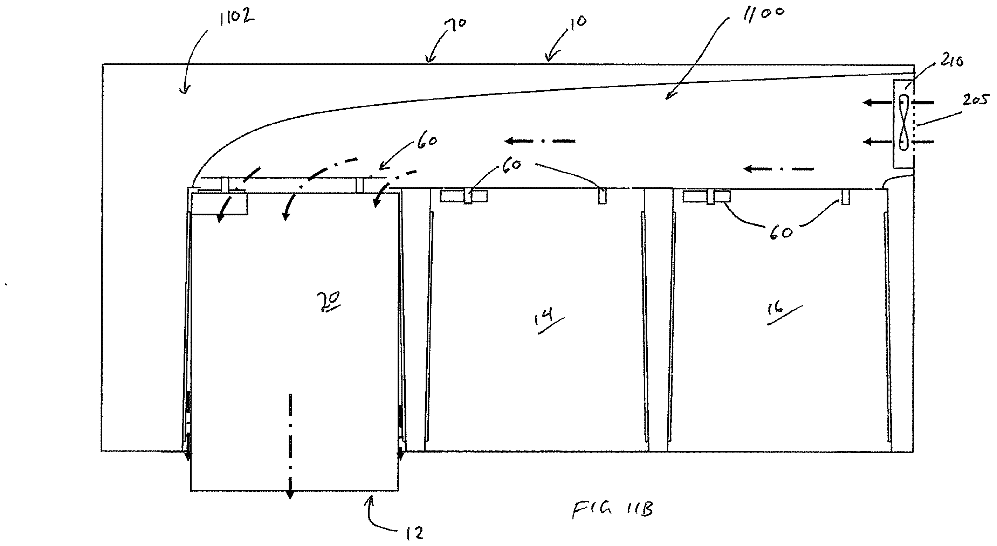

Figure 8 illustrates the embodiment of figure 7, but additionally indicates how airflow induced by an air transport system may flow once a dock is inserted into a dock 12. Notional airflow paths are indicated in figure 8 by dot-dashed arrows. As noted above the air transport system includes a fan 210 and one or more vents 205 to enable cooling air to move through the housing 70 of the docking device 10. In some embodiments the fan 210 can be arranged to blow air out through the vent (or vents) 205 in the housing of the housing 70 or to suck air into the housing 70 to thereby induce airflow within the housing 70. In most embodiments the fan will push air that is drawn into the vent 205 into the housing 70 to pressurise the inside of the housing, or a plenum area within the housing (as illustrated in connection with figures 11A and 11B).

In figure 8 air that has been drawn into the housing 70 though vent 205 by fan 210 is circulated through the inside of the housing 70 to cool components of the docking device. Some air circulates to cool the data processing subsystems 200 (e.g. power supply, circuit boards for data communications and computing resources.). However because the inside of the housing 70 is pressurised by the fan 210 some of the cooling air is pushed out thought the airflow path 62 through the vent 66 that has been opened by the movement of the damper 60 by the insertion of the mass storage device 20 into the dock 12. That cooling air then flows past the mass storage device, cooling it in turn before being exhausted to atmosphere via the dock's 12 entry 12.1.

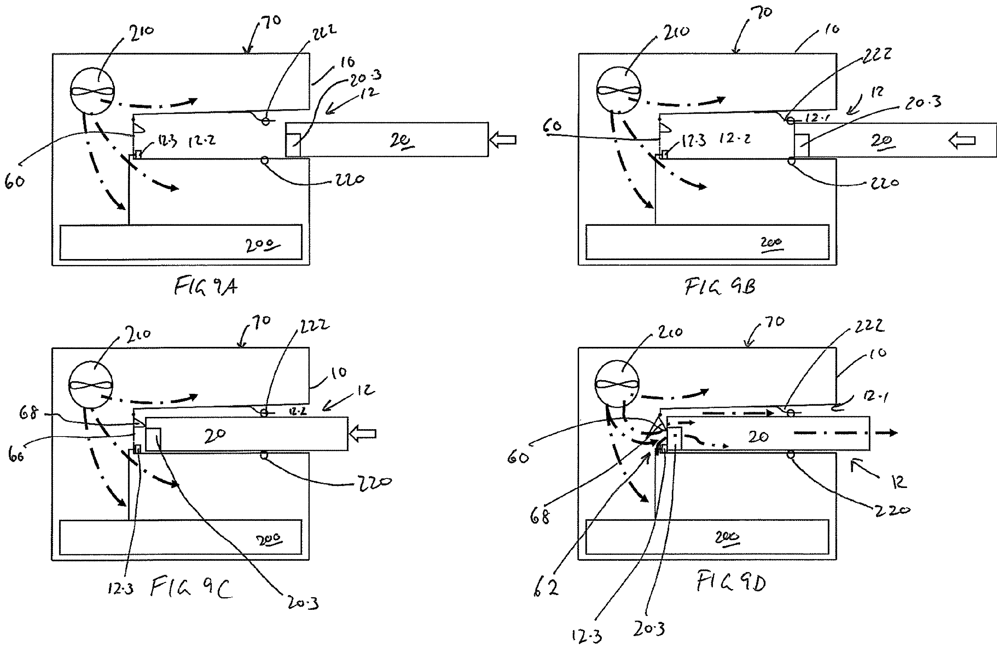

Figures 9A to 9D show a sequence of schematic illustrations of a mass storage device 20 being inserted into the dock 12 in a similar fashion to figures 4A to 4D. The embodiment of the dock 12 shown in figures 9A to 9D include a damper arrangement as described in connection with figures 6 to 8 and a guiding mechanism as described in connection with figures 2 to 5E.

In Figure 9A a user begins to insert a mass storage device 20 into the entry 12.1 of the dock 12. The mass storage device is placed in an appropriate orientation so that its connector 20.3 is at the back so that it will meet the electrical connector 12.3 of the dock 12 when the mass storage device 20 is fully docked. During this phase of insertion, the damper 60 is in the closed position, and any flow of cooling air induced by the fan 210 within the housing 70 is only cooling the components 200 (and any mass storage device inserted into any other dock - not shown), as indicated by dot-dash arrows.

Next, in figure 9B the mass storage device 20 is inserted along the direction of insertion a little further, namely to the point that the rearmost edge of the mass storage device 20 is just contacting the fixed guides 220 and the movable guides 222. With further insertion of the mass storage device 20 the into the dock 12 as shown in figure 9C, the bottom of the mass storage device 20 will begin to be guided on top of the fixed guides 220 (which in this case the rollers 221 provide low friction) and the movable guides 222 will be move upwards by the top surface of the mass storage device 20 to accommodate the thickness of the mass storage device 20. The movable guides 222 may also be low friction and will press downwards against mass storage device due to the bias applied by their respective springs 224 to thereby provide some clamping of the mass storage device 20 between the fixed and movable guides 220, 222. At the point shown in Figure 9C The mass storage device 20 is just touching the actuator 68 of the damper 60 but has not yet been fully docked, or inserted enough to push the damper 60 open. Accordingly the damper 60 remains closed, and any flow of cooling air induced by the fan 210 within the housing 70 is only cooling the components 200 (and any mass storage device inserted into any other dock - not shown), as indicated by dot-dash arrows. Continued insertion of the mass storage device 20 into the dock 12 causes the back of the mass storage device 20 to push on the actuator 68 of the damper 60 which pushes the damper open to create the airflow path 62 into the interior space 12.2 of the dock 12, as shown in figures 9D. In this configuration the mass storage device 20 has been fully inserted into the dock such that the compatible connector 20.3 of the mass storage device 20 has fully engaged with the electrical connector 12.3 of the dock 12. With the airflow path 62 open cooling air can flow though the dock to cool the mass storage device 20 while it is in use and generating heat during data reads and writes.

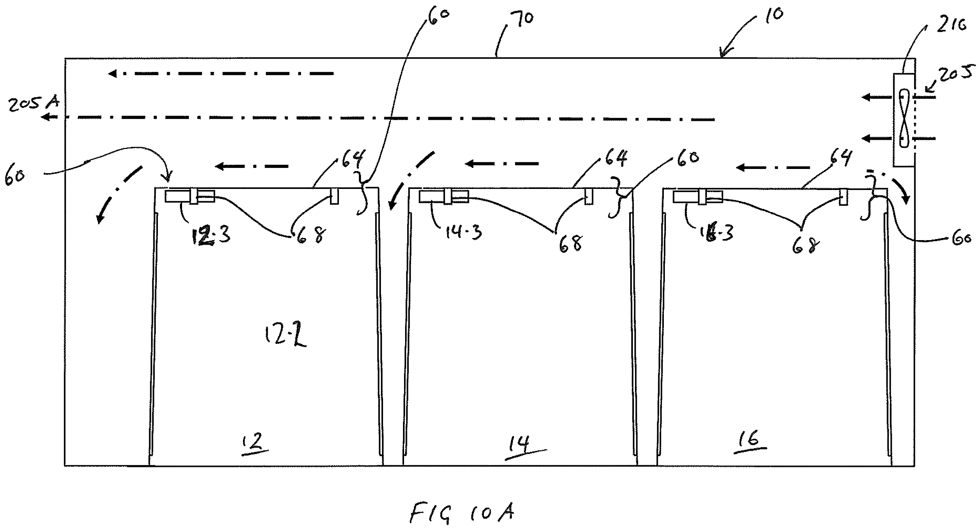

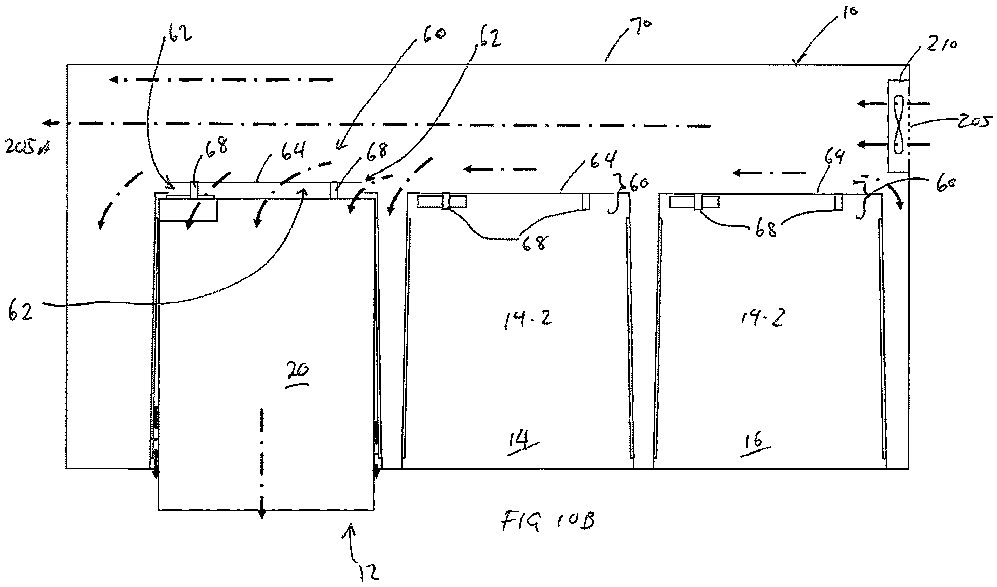

Figures 10A and 10B illustrate a top views of a docking device 10 which include a dock 12 in the conditions illustrated in figures 6 and 7 respectively. Like components have been like numbered and for brevity will not be described again. Of note, in this view it can be seen that the docking device 10 can be provided with multiple vents 205 and 205A, one being an inlet (205) and one being an outlet (205A) to provide an airflow path to cool components within the housing 70. Also it can be seen that damper 60 comprises a flap 64 and the actuator 68 comprises a pair or protruding members spaced across the flap 64.

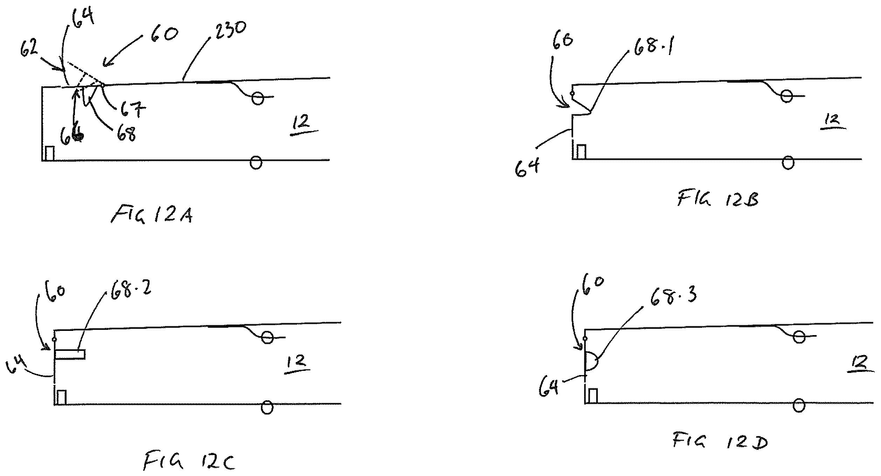

Figures 11 A and 11B show schematic cross sections through another embodiment of the present disclosure which further includes a plenum 1100 that is arranged in fluid communication with the dock or a plurality of docks and the air transport system such that cooling air can be supplied to to the dock or docks. In figure 11A no mass storage device is shown in the dock 12, whereas in figure 11B a mass storage device 20 is shown inserted into the dock 12 to illustrate the airflow path through the plenum 1100 and one of the docks 12, 14, 16. The plenum 1100 provides a chamber that is used to provide cooling air into the docks 12, 14 and 16 when a mass storage device is inserted therein. Preferably the plenum 1100 is of a size and shape that approximately balances the airflow available to all docks in a multi dock system. The damper 60 associated with each dock controls the flow of cooling air from the plenum 1100 into the respective dock to cool a mass storage device when it is docked therein. The air transport system in the form of fan 210 can draw air though a vent 205 to pressurise the plenum 1100 such that air flows from the plenum through any open damper 60 associated with a dock 12, 14, 16 etc.. In this way dedicated cooling air can be provided to the dock/s and any mass storage device mounted therein without first drawing heat from other components (e.g. 200) of the mass storage device. This may maximise efficiency of cooling for the docks. The air transport system of the mass storage device 10 may optionally include one or more fans 210B and vents 205B to provide additional cooling air for other heat generating components of the docking device 10 housed in the remaining volume 1102 within the housing 70. Additional baffles, chambers or other airflow control elements can be provided to assist in cooling other components if the docking device 10 and will not be discussed herein. A plenum 1100 such as described in relation to the present embodiment, can also be use with embodiments of the docking device illustrated in figures 2 to 10, and which includes docks such as those illustrated in figures 12A inwards.

The dampers and actuators illustrated in the previous embodiments have been of the same configuration to aid understanding of the overall disclosure. However it should be noted that the damper may take different forms in various embodiments of the present invention. Figures 12A to figure 12H illustrate some variations that may be possible in various embodiments.

Figure 12A shows an embodiment where the damper 60 is located on a side 230 wall of the dock 12, rather than its back wall. Otherwise the damper 60 is similar to the previous embodiment in that is comprises a flap 64 sized to close off the airflow path 62 through the vent 66 in the side 230 of the dock 12. The flap 64 is connected to the side wall 230 of the dock 12 by a hinge 67. The actuator 68 in this example is a lobe shaped protrusion (or several such protrusions) that extends into the internal space 12.2 of the dock 12 when the damper 60 is closed. When a mass storage device 20 is pushed into the dock 12 towards its docked position, the actuator 68 touches the mass storage device and is pushed upwards by it. In turn the actuator 68 pushes the damper 64 open (dotted line) to thereby open the airflow path 62. Such a damper can be located on any side wall of the dock and operate in the same way. Cooling effectiveness is improved by positioning the damper towards or at the innermost end of the dock 12.

Figure 12B to 12D show a similar damper as that shown in figures 6 to 8 etc, but which has a different form of actuator. In Figure 12 B the actuator 68.1 is formed integrally with the flap 64, e.g. the flap 64 may be a pressed metal flap, or moulded part, with a ridge or protrusion that serves as the actuator 68.1. In figure 12C the actuator 68.2 comprises one or more rods or pins carried on the flap 64 that extends from into the internal space 12.2 of the dock 12. In figure 12D the actuator 68.3 comprises one or more bosses that protrude from the inner surface of damper flap 64 or blocks mounted to the inner surface of the flap 64 of the damper 60. Bosses or blocks (or actuators of other forms) may be of any suitable shape but, employing a relatively smoothly curved contact surface may be advantageous as the location and angle of contact between the actuator 68 and the mass storage device changes as the damper moves. So having a smooth and curved surface can avoid catching on the mass storage device, thereby easing correct seating of the mass storage device in a dock.

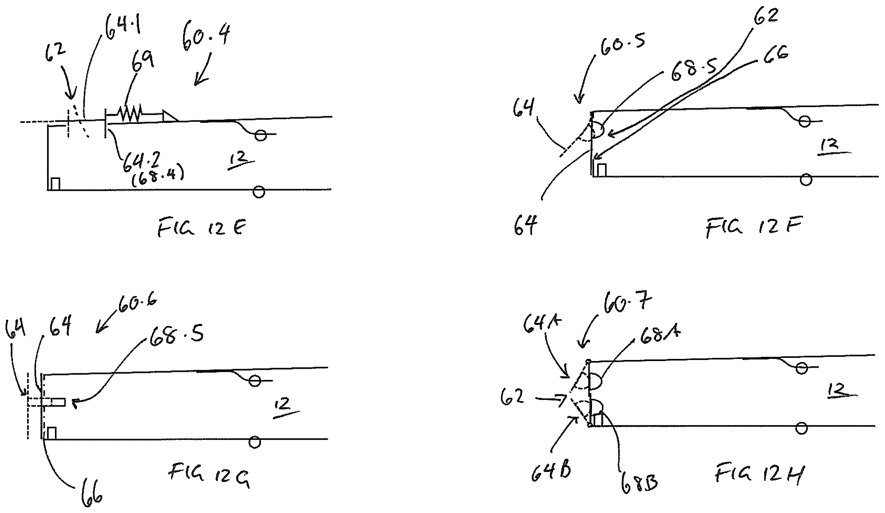

Figure 12E shows a different form of damper 60.4. Instead of taking the form of a flap valve preventing airflow into a dock when there is no mass storage device docked therein but that is is opened by the actuator when one is inserted, the damper 60.4 in this embodiment operates like a slide valve and has a slidable gate member 64.1 that can be pushed from a closed position (solid lines) to an open position (dotted lines). The slidable member 64.1 has an inwardly depending flange 64.2 that extends into the internal space 12.2 of the dock. The flange 64.2 acts as the actuator of this embodiment and is engaged by a mass storage device when it is inserted into the dock 12. The sliding member 64.1 is biased to slide to the closed position in the absence of a mass storage device by a spring 69.

Figure 12F shows another flap-valve type damper 60.5. This damper 60.5 uses a resilient member to perform the role of both the flap 64 and biasing means to close the damper 60.5. For example the damper can comprise a resilient metal or plastic flap 64 attached along one side the vent 66. In use the flap 64 is flexed by application of force on its actuator 68.5 to thereby open the airflow path 62 into the dock 12. The actuator 68.5 can take any suitable form such as a protrusion integrally formed into the flap 64, or one or more rods, pins, lobes, bosses, knobs, blocks; or spacers mounted thereto.

Figure 12G shows an embodiment in which the damper 63.6 operates like a poppet valve biased to its closed position. The damper 60.6 includes a valve member 64 that seals against the outer side of a vent 66 that can be pushed open by an actuator 68.5 in the form of one or slidable pins or stems, that are depressed when a mass storage device is inserted into the dock 12.

Figure 12H shows an embodiment of a damper 60.7 that includes multiple damper doors 64A and 64B that are both opened by the insertion of mass storage device into the dock. Each door 64A and 64B may have its own actuator 68A and 68B respectively. The actuator may be of any suitable type illustrated in other embodiments. Moreover the doors 64A, 64B may be hinged or formed from resilient material as per the embodiment figure 12F.

Using an embodiment of a docking device with a ventilation system as described herein that only opens an airflow path into the internal space of the dock when a mass storage device is inserted therein, may avoid a problem of the unnecessary escape of cooling air though docks that are not populated by mass storage devices. Moreover this airflow management system requires no additional operation to be performed by the user as insertion of the mass storage device actuates the mass storage device's own access to cooling air, and it's removal closes off the airflow path into the dock when it no longer needs to be cooled.

The docking station can be used to connect the mass storage device to an external data processing system for example a personal computer, computer workstation, computer server system, video capture or recording system, video editing system, network attached storage.

The docking device 10 may include additional components and subsystems, such as circuitry 200 which provide power and data connections between the docks and external data sources, and data processing hardware that processes data that is read or written from or to a mass storage device inserted into a dock(s) 12, 14, 16. The docking device 10 may also include a cooling system e.g. a ventilation system including one or more fans 210, to remove heat generated by the docking device during use. This will be particularly important when large numbers of docks are contained in a docking device and high data read/write rates are needed. Other data processing may also be performed by the data processing hardware of the docking device 10 , such as encoding/decoding, transcoding, encryption or decryption and device management which will add to the amount of heat that needs to be dissipated from the docking device.

Any definitions expressly provided herein for terms contained in the appended claims shall govern the meaning of those terms as used in the claims. No limitation, element, property, feature, advantage or attribute that is not expressly recited in a claim should limit the scope of the claim in any way.

As used herein the terms "include" and "comprise" (and variations of those terms, such as "including", "includes", "comprising", "comprises", "comprised" and the like) are intended to be inclusive and are not intended to exclude further features, components, integers or steps.

For aspects of the disclosure that have been described using flowcharts, a given flowchart step could potentially be performed in various ways and by various devices, systems or system modules. A given flowchart step could be divided into multiple steps and/or multiple flowchart steps could be combined into a single step, unless the contrary is specifically noted as essential. Furthermore, the order of the steps can be changed without departing from the scope of the present disclosure, unless the contrary is specifically noted as essential.

Without limiting the foregoing disclosure, particular embodiments of the present disclosure are described by the following clauses.

Clause A1: A docking device for receiving and making a data connection with at least one mass storage device, said docking device including:
at least one dock for receiving a mass storage device, said dock comprising:
an internal space into which a mass storage device may be received for docking;
an entry into a first end of the internal space, through which a mass storage device is inserted along a direction of insertion for docking;
an electrical connector accessible from the internal space, said electrical connector arranged to provide at least a data connection to a docked mass storage device, the electrical connector being located opposite the entry and separated therefrom along the direction of insertion;
at least one fixed guide positioned in a fixed physical relationship to the electrical connector,
said at least one fixed low friction guide being arranged to guide insertion of a mass storage device into the internal space, and
at least one movable guide mounted in a variable physical relationship to the electrical connector, and biased towards the at least one fixed guide, such that the at least one movable guide pushes a docked mass storage device against the at least one friction guide.

Clause A2: A docking device of clause A1 wherein said at least one movable guide is supported by at least one spring as arranged to bias the at least one movable guide towards the at least one fixed guide.

Clause A3: A docking device of clause A2 wherein said at least one spring comprises a leaf spring.

Clause A4: A docking device of any one of clauses A1 to A3 wherein the dock further includes one or more slides along on which a mass storage device may be guided during insertion into the dock.

Clause A5: A docking device of any one of clauses A1 to A4 wherein the internal space within said dock is rectangular or generally rectangular in cross section, taken perpendicular to the direction of insertion, and said internal space is defined by a first side associated with at least one fixed guide, and a second side associated with the at least one movable low friction guide that is opposite the first side and being separated therefrom by a pair of third sides that are opposite to each other, wherein the opening is located at an outer end of the first side, second side and pair of third sides.

Clause A6: A docking device of clause A5 wherein said one or more slides comprise one or more ribs extending along each of said third sides in the direction of insertion.

Clause A7: A docking device as described in either of clause A5 or A6 wherein,
either or both of:
the first and second sides are angled relative to each other so that a distance between them reduces along the direction of insertion; and
the pair of third sides or slide slides associated therewith are angled relative to each other so that a distance between them reduces along a direction of insertion;
such that the internal space tapers from the entry towards the connector to thereby guide a mass storage during insertion into the dock such that a compatible electrical connector of the mass storage device is aligned with the electrical connector of the dock for connection thereto.

Clause A8: A docking device of any one of clauses A1 to A7 which is configured to receive a mass storage device according to at least one standard which specifies at least some predetermined geometrical properties of the mass storage device; wherein said predetermined geometrical properties include a position of a compatible electrical connector and a position of at least one mounting hole defined by a threaded body on at least one side of the mass storage device; and wherein said at least one fixed guides are positioned relative to the electrical connector of the dock so that in use they are aligned, along the direction of insertion, with a threaded body defining least one mounting hole of a mass storage device inserted into said dock.

Clause A9: The docking device of clause A8 wherein at least one said fixed guide is positioned such that when a mass storage device having said at least some predetermined geometrical properties is fully inserted into the dock such that at least a data connection is made between the electrical connector of the dock and the compatible electrical connector of the mass storage device, said at least one fixed guide is in contact with a respective threaded body defining a mounting hole of a mass storage device.

Clause A10: A docking device of any one of clauses A1 to A9 wherein either or both of said at least one fixed guide or said at least one moveable low comprises a set of one or more rollers.

Clause A11: A docking device of clause A10 wherein the set of one or more rollers comprise a pair of rollers with a common axis of rotation.

Clause A12: The docking device of clause A5 or any one of clauses A6 to A11 when dependent on clause A5 wherein:
the at least one fixed guide comprises at least one roller mounted at an outer portion of the first side such that a rolling surface of said at least one roller protrudes into the internal space of the dock to engage with a surface of a mass storage device inserted into the dock;
the at least one movable guide comprises at least one roller mounted at an outer portion of the second side such that a rolling surface of said at least one roller protrudes into the internal space of the dock to engage with a mass storage device inserted into the dock.

Clause B1: A docking device for receiving and making a data connection with at least one mass storage device, said docking device including:
one or more docks for receiving a respective mass storage device, each dock comprising:
at least one wall that at least partly defines an internal space into which a mass storage device may be received for docking,
an entry into a first end of the internal space, through which a mass storage device is inserted along a direction of insertion for docking; and
an electrical connector accessible from the internal space, said electrical connector including one or more electrical contacts arranged to provide at least a data connection to a docked mass storage device; the electrical connector being located opposite the entry and separated therefrom along the direction of insertion; and
a damper associated with the dock, said damper being movable between an open position and a closed position to control the flow of cooling air through the internal space of said dock, wherein movement of said damper between the closed position and the open position is actuated by insertion of a mass storage device into the dock.

Clause B2: The docking device of clause B1 wherein for each dock: when said damper is in the open position, cooling air can pass into the internal space to cool a mass storage device docked therein; and when said damper is in a closed position cooling air is blocked from passing into said internal space.

Clause B3: The docking device of any one Clauses B1 to B2 wherein the damper is biased to the closed position in the absence of a mass storage device in the dock.

Clause B4: The docking device of any one of clauses B1 to B3 which further includes a plenum arranged in fluid communication with at least two docks, such that said damper associated with each dock controls the flow of cooling air between the plenum and the respective dock.

Clause B5: The docking device of clause B4 which further includes an air transport system that pressurises the plenum such that air flows from the plenum through an open damper associated with a dock.

Clause B6: The docking device of any one of clauses B1 to B5 wherein each dock further includes an actuator, that is moved by a mass storage device when said mass storage device is inserted into the internal space of the dock such that said actuator opens said damper.

Clause B7: The docking device of any one of clauses B1 to B6 wherein the actuator comprises one or more protrusions or projections that are integrally formed with the damper or carried on the damper, wherein said one or more protrusions or projections extend into the internal space of the dock and are pushed by the mass storage device during its insertion into the dock to thereby move the damper to the open position.

Clause B8: The docking device of clause B7 wherein said one or more protrusions or projections includes at least one of a: rod, pin, lobe, flange, boss, knob, ridge, block; and spacer.

Clause B9: The docking device of clause B6 wherein the actuator is carried on a wall that at least partly defines the internal space within the dock and transfers motion of the mass storage device during insertion into motion that opens the damper.

Clause B10: The docking device of clause B7 or B8 which includes a plurality of such protrusions or projections.

Clause B11: The docking device of any one of clauses B1 to B10 wherein said damper comprises a movable flap.

Clause B12: The docking device of clause B11 wherein the flap is carried on a hinge to enable movement of the flap between the open and closed position.

Clause B13: The docking device of clause B1wherein the flap is resiliently deformable and deforms to enable movement of the flap between the open and closed position.

Clause B14: The docking device of any one of clauses B1 to B13 wherein the damper includes a spring to bias the damper into the closed position.

Clause B15: The docking device of any one of clauses B1 to B14 wherein said damper comprises a movable member that is pushed open by the insertion of a mass storage device into the dock wherein said member is made of resilient material such the damper is biased to return to the closed position on removal of said mass storage device from the dock.

Clause B16: The docking device of any one of clauses B1 to B15 wherein said damper opens or closes an airflow path through a wall that at least partially defines the internal space of the dock.

Clause B17: The docking device of any one of clauses B1 to B16 wherein each dock further comprises:
at least one fixed guide positioned in a fixed physical relationship to the electrical connector, said at least one fixed guide being arranged to guide insertion of a mass storage device into the internal space, and
at least one movable guide mounted in a variable physical relationship to the electrical connector, and biased towards the at least one fixed guide, such that the at least one movable guide pushes a docked mass storage device against the at least one fixed guide.

Clause B17: The docking device of clause B17 which further comprises a docking device of clause A2 to A12.

Clause B18: The docking device of any one of clauses A1 to A12 or clause B16 or B17, wherein said at least one fixed guide is a low friction guide.

Clause B19: The docking device of any one of clauses A1 to A12 or any one of clauses B17 to B181 to A12, wherein said at least one movable guide is a low friction guide.

Clause B20: A docking device of clause B17 wherein either or both of:
said at least one fixed guide; and
said at least one movable low:
   comprises a set of one or more rollers.

Clause B21: The docking device of clause B17, which is configured to receive a mass storage device according to at least one standard which specifies at least some predetermined geometrical properties of the mass storage device; wherein said predetermined geometrical properties include a position of a compatible electrical connector and a position of at least one mounting hole defined by a threaded body on at least one side of the mass storage device; and wherein said at least one fixed guides are positioned relative to the electrical connector of the dock so that in use they are aligned, along the direction of insertion, with a threaded body defining least one mounting hole of a mass storage device inserted into said dock.

Clause B22: The docking device of clause B17, wherein said at least one movable guide is supported by at least one spring as arranged to bias the at least one movable guide towards the at least one fixed guide.

Clause B23: The docking device of clause B22, wherein said at least one spring comprises a leaf spring.

Clause B24: The docking device of clause B21, wherein at least one said fixed guide is positioned such that when a mass storage device having said at least some predetermined geometrical properties is fully inserted into the dock such that at least a data connection is made between the electrical connector of the dock and the compatible electrical connector of the mass storage device, said at least one fixed guide is in contact with a respective threaded body defining a mounting hole of a mass storage device.

Clause B25: The docking device of clause B17, wherein the internal space within said dock is rectangular or generally rectangular in cross section, taken perpendicular to the direction of insertion, and said internal space is defined by a first side associated with at least one fixed guide, and a second side associated with the at least one movable low friction guide that is opposite the first side and being separated therefrom by a pair of third sides that are opposite to each other, wherein the opening is located at an outer end of the first side, second side and pair of third sides; and
wherein either or both of:
the first and second sides are angled relative to each other so that a distance between them reduces along the direction of insertion; and
the pair of third sides or slide slides associated therewith are angled relative to each other so that a distance between them reduces along a direction of insertion;
   such that the internal space tapers from the entry towards the connector to thereby guide a mass storage during insertion into the dock such that a compatible electrical connector of the mass storage device is aligned with the electrical connector of the dock for connection thereto.

Clause B26: The docking device of clause B17, wherein the dock further includes one or more slides along on which a mass storage device may be guided during insertion into the dock.

## Claims

1. A docking device for receiving and making a data connection with at least one mass storage device, said docking device including:
one or more docks for receiving a respective mass storage device, each dock comprising:
at least one wall that at least partly defines an internal space into which a mass storage device may be received for docking,
an entry into a first end of the internal space, through which a mass storage device is inserted along a direction of insertion for docking; and
an electrical connector accessible from the internal space, said electrical connector including one or more electrical contacts arranged to provide at least a data connection to a docked mass storage device; the electrical connector being located opposite the entry and separated therefrom along the direction of insertion; and
a damper associated with the dock, said damper being movable between an open position and a closed position to control the flow of cooling air through the internal space of said dock, wherein
movement of said damper between the closed position and the open position is actuated by insertion of a mass storage device into the dock.

2. The docking device of claim 1 wherein for each dock: when said damper is in the open position, cooling air can pass into the internal space to cool a mass storage device docked therein; and when said damper is in a closed position cooling air is blocked from passing into said internal space.

3. The docking device of any one of claims 1 or 2 wherein the damper is biased to the closed position in the absence of a mass storage device in the dock.

4. The docking device of any one of claims 1 to 3 which further includes a plenum arranged in fluid communication with at least two docks, such that said damper associated with each dock controls the flow of cooling air between the plenum and the respective dock.

5. The docking device of claim 4 which further includes an air transport system that pressurises the plenum such that air flows from the plenum through an open damper associated with a dock.

6. The docking device of any one of claims 1 to 5 wherein each dock further includes an actuator, that is moved by a mass storage device when said mass storage device is inserted into the internal space of the dock such that said actuator opens said damper.

7. The docking device as claimed in any one of claims 1 to 6 wherein the actuator comprises one or more protrusions or projections that are integrally formed with the damper or carried on the damper, wherein said one or more protrusions or projections extend into the internal space of the dock and are pushed by the mass storage device during its insertion into the dock to thereby move the damper to the open position.

8. The docking device of claim 7 wherein said one or more protrusions or projections includes at least one of a: rod, pin, lobe, flange, boss, knob, ridge, block; and spacer.

9. The docking device of claim 6 wherein the actuator is carried on a wall that at least partly defines the internal space within the dock and transfers motion of the mass storage device during insertion into motion that opens the damper.

10. The docking device of any one of claims 1 to 9 wherein said damper comprises a movable flap.

11. The docking device of claim 10 wherein the flap is resiliently deformable and deforms to enable movement of the flap between the open and closed position.

12. The docking device of any one of claims 1 to 11 wherein said damper comprises a movable member that is pushed open by the insertion of a mass storage device into the dock wherein said member is made of resilient material such the damper is biased to return to the closed position on removal of said mass storage device from the dock.

13. The docking device of any one of claims 1 to 12 wherein said damper opens or closes an airflow path through a wall that at least partially defines the internal space of the dock.

14. The docking device of any one of claims 1 to 13 wherein each dock further comprises:
at least one fixed guide positioned in a fixed physical relationship to the electrical connector, said at least one fixed guide being arranged to guide insertion of a mass storage device into the internal space, and
at least one movable guide mounted in a variable physical relationship to the electrical connector, and biased towards the at least one fixed guide, such that the at least one movable guide pushes a docked mass storage device against the at least one fixed guide.

15. A docking device as claimed in claim 14 wherein either or both of:
said at least one fixed guide; and
said at least one moveable low:
comprises a set of one or more rollers.
